# EUROPÄISCHE PATENTSCHRIFT

(11) **EP 2 338 631 B1**
(45) Veröffentlichungstag und Bekanntmachung des Hinweises auf die Patenterteilung: **17.06.2015**
(21) Anmeldenummer: 10195432.9
(22) Anmeldetag: 16.12.2010
(51) Int. Cl.: B23K 20/10, F24D 19/00, F24H 9/00, F28D 1/03, F28F 3/02

(54) **Verfahren zur Herstellung eines Heizkörpers unter Verwendung eines Ultraschallschweißens; danach hergestellter Heizkörper**
Method for producing a heater by means of ultrasound welding; Heater produced according to the method
Procédé de fabrication d'un corps de chauffage en utilisant un soudage à ultrasons; Raditeur de chauffage fabriqué par cette méthode

(30) Priorität: 22.12.2009 DE 102009055177
(43) Veröffentlichungstag der Anmeldung: 29.06.2011
(73) Patentinhaber: Caradon Stelrad B.V., 2200 Herentals (BE); Hydro Aluminium Rolled Products GmbH, 41515 Grevenbroich (DE)
(72) Erfinder: Grauls, Roger, 3971 Heppen (BE); Wojcik, Guy, 1410 Waterloo (BE); Benzler, Tobias, 21279 Appel/Grauen (DE); Pritzlaff, Reinhard, 50181 Bedburg (DE); Wehner, Torsten, 53332 Bornheim (DE); Meyer, Rolf Heinrich, 21244 Buchholz i.d. Nordheide (DE)
(74) Vertreter: Bauer, Dirk

(56) Entgegenhaltungen:
- EP-A1- 1 050 734
- DE-U1-202007 009 701
- JP-A- 2005 254 324

## Beschreibung

### Einleitung

Die Erfindung betrifft ein Verfahren zur Herstellung eines Heizkörpers und einen Heizkörper gemäß dem Oberbegriff der Ansprüche 1 und 14 (siehe, z.B., EP 1 050 734 A).

### Stand der Technik

Schweißverfahren sind bei den bekannten Herstellverfahren von Heizkörpern, die typischerweise aus metallischen Materialien gefertigt werden, weit verbreitet. Insbesondere bei Plattenheizkörpern, die mindestens eine aus zwei Heizkörpern zusammengesetzte Heizplatte aufweisen, erfolgt das fluiddichte Verschweißen der Halbschalen miteinander insbesondere unter Anwendung des Widerstandsschweißens, wobei nach dem Prinzip des Rollennahtschweißens die zuvor in die Fügeposition gebrachten Halbschalen mittels zwei Elektrodenrollen miteinander verschweißt werden. Einen weiteren Anwendungsfall für das Widerstandsschweißen bei den bekannten Herstellverfahren von Heizkörpern bildet die Verbindung der mäanderförmig gebogenen Konvektorb!eche mit den Heizplatten. Hier werden im Wege des Punktschweißens die Konvektorbleche mit Kontaktstreifen zwischen benachbarten Konvektorkanälen mit der Heizplatte verbunden. Im Wege des Widerstandsschweißens werden darüber hinaus typischerweise auch Anschlussstücke, die zur Aufnahme von Regelventilen, Entlüftungsventilen oder Entwässerungsventilen dienen mit den Heizplatten oder benachbarte Heizplatten mehrlagiger Plattenheizkörper miteinander verbunden. Auch bei sogenannten Heizwänden, die eine andere Unterart der Heizkörper darstellen, werden Konvektoren durch Widerstands-Punktschweißen mit dem Rohrkörper verbunden.

Grundsätzlich haben sich die verschiedenen Arten des Widerstandsschweißens, die bereits seit geraumer Zeit bei der Heizkörperherstellung angewendet werden, gut bewährt. Gleichwohl ist ein gewisser Nachteil dieser Verbindungstechnik darin zusehen, dass die für den Schweißvorgang benötigte Leistung und infolge davon auch die während des Herstellprozesses benötigte Energie recht hoch ist. Mit steigenden Energiepreisen stellen somit die Kosten für den beim Schweißen benötigten Energieanteil einen nicht unerheblichen Faktor an den gesamten Herstellkosten dar, Darüber hinaus wirkt sich die große beim Widerstandsschweißen in die zu verbindenden Teile eingebrachte Wärmemenge auch dahingehend negativ aus, dass im Zuge der Abkühlung der gefügten Teile Wärmespannungen entstehen, die bei den fertigen Heizkörpern mitunter zu nicht zulässigen Verzügen, das heißt Abweichungen von der Sollgeometrie, führen (sogenannter "Bananeneffekt").

Ultraschallschweißen wird in der Regel für das Verschweißen von Kunststoffen angewendet. Die Grundsätze des torsionalen Ultraschallschweißens sind beschrieben unter www.telsonic.com, wo diese von der Firma TELSONIC ULTRASONICS entwickelte Methode unter der Bezeichnung "SONiQTWiST" beschrieben wird. In der WO 2008/068281 A1 1 ist die Anwendung des torsionalen Ultraschallschweißens im Bereich der Kunststofftechnik beschrieben.

### Aufgabe

Der Erfindung liegt die Aufgabe zugrunde, ausgehend von den bekannten Herstellverfahren ein alternatives Fügeverfahren vorzuschlagen, das sich einerseits durch einen geringeren Energieverbrauch und andererseits durch eine reduzierte Neigung der gefügten Bauteile zum Verzug auszeichnet. Des Weiteren besteht die Aufgabe der Erfindung darin, einen Heizkörper bereitzustellen, der energetisch günstig herstellbar ist und bei dem eine reduzierte Neigung zum Verziehen der gefügten Bauteile besteht.

### Lösung

Ein Verfahren und ein Herzkörper gemäß der Erfindung sind in den Ansprüchen 1 und 14 definiert.

Bei dem Ultraschallschweißen handelt es sich wie beim Rotationsreibschweißen und beim Reibrührschweißen um eine Unterart des Reibschweißens. Ultraschallschweißen ist dabei ein Verfahren, das üblicherweise zum Fügen von Kunststoffen verwendet wird, teilweise aber auch bereits zur Verbindung von Metallen angewendet wurde. So ist es bekannt, beim Anschluss von Mikroelektronik-Chips extrem dünne Aluminiumdrähte zwischen den so genannten Bondinseln und den Anschlüssen mittels Ultraschall zu verschweißen.

Charakteristikum des Ultraschallschweißens ist es, dass eines der zu verbindenden Teile fest eingespannt wird, wohingegen das andere Teil von einem Ultraschallresonator (Sonotrode) in Schwingung versetzt und dabei gleichzeitig auf das feststehende Teil gepresst wird. An der Kontaktstelle findet eine Mikro-Relativbewegung statt, wodurch die Moleküle der Werkstoffe in Schwingung versetzt werden, was zu einer stoffschlüssigen Verbindung der Werkstoffe führt. Es entsteht dabei keine nennenswerte Wärme an den zu verbindenden Teilen, sondern die sehr dauerhafte Verbindung entsteht nach einem Aufbrechen eventueller Oxidschichten der zu verbindenden Werkstückoberflächen im Wesentlichen durch ein Ineinander-Verzahnen der Fügepartner. Typisch dabei ist, dass die Verbindung durch ein Zusammenspiel von Kraft und Bewegung erzeugt wird.

Während beim Ultraschallschweißen von Kunststoffteilen die Ultraschallschwingung senkrecht zur Kontaktoberfläche der beiden Fügepartner verläuft, so dass Anpresskraft und Ultraschallschwingung die selbe Wirkrichtung aufweisen (Longitudinales Ultraschallschweißen), ist dies beim bekannten Ultraschallschweißen von Metallen in sofern abweichend, als die Ultraschallschwingung beim Metall-Ultraschallschweißen parallel zur Schweißfläche und somit senkrecht zur Schweißkraft (Anpresskraft) eingebracht wird. Im Gegensatz zu den eingeleiteten Longitudinalwellen beim Kunststoffschweißen soll die transversale Schwingung beim Metall-Ultraschallschweißen die auf Metalloberflächen vorhandenen Kontaminations- und Oxidschichten aufreißen und verdrängen. Erst der hieraus entstehende direkte Kontakt zwischen den "gereinigten" Oberflächen der Fügepartner erlaubt eine dauerhafte stoffschlüssige Verbindung der Fügepartner.

Vorteilhaft für die Funktionalität des erfindungsgemäßen Verfahrens ist die Anwendung des torsionalen Ultraschallschweißens. Hierbei handelt es sich um ein Ultraschallschweißverfahren, bei dem die Sonotrode weder longitudinal noch transversal bewegt wird, sondern torsional, das heißt zu Drehschwingungen, angeregt wird. Das torsionale Ultraschallschweißen kann in gewisser Weise als Mischverfahren zwischen dem Vibrationsschweißen und dem klassischen Ultraschallschweißen mit longitudinaler oder transversaler Schwingungseinleitung betrachtet werden.

Die Vorteile des torsionalen Ultraschallschweißens - insbesondere im Hinblick auf die Anwendung bei der Heizkörperherstellung - liegen in der Möglichkeit auch unzugängliche Schweißstellen einfach schweißen zu können, da nur eine zur Kontaktebene senkrechte Zustellbewegung erforderlich ist. Daher eignet sich das Verfahren auch für Schweißverbindungen, die z.B. in schmalen und/oder tiefen Rinnen, Spalten, Mulden o.ä. angeordnet sind.

Die sich ergebenden Schweißnaht- bzw. Schweißpunktfestigkeiten sind sehr hoch. Dabei lässt sich eine gute Prozesskontrolle erzielen, was insbesondere in der Massenherstellung, wie sie bei der Heizkörperfertigung üblich ist, einen großen Vorteil darstellen. Darüber hinaus treten insbesondere beim Verschweißen dünner Bleche bzw. Folien keine Membraneffekte auf. Ferner besitzt das torsionale Ultraschallschweißen aufgrund der sehr kurzen Zykluszeiten eine sehr hohe Wirtschaftlichkeit bei gleichzeitig sehr geringer Schwingungsbelastung im stillstehenden, typischerweise unteren Teil der beiden Fügepartner.

In Bezug auf die Heizkörperherstellung liegen die wesentlichen Vorteile darin, dass sowohl mit dem torsionalen Ultraschallschweißen als auch dem transversalen Ultraschallschweißen nur eine sehr geringe Wärmemenge beim Fügevorgang ausschließlich im Bereich der Fügezone erzeugt wird, wodurch jeglicher Verzug der beiden aneinander gefügten Bauteile des Heizkörpers vermieden wird. Ein Verzug kann deshalb nicht auftreten, da mangels Wärmeerzeugung auch keine Wärme von den zu verbindenden Bauteilen aufgenommen werden kann bzw. muss, so dass thermische Spannungen während eines sich dem Schweißvorgang anschließenden Abkühlvorgangs nicht auftreten können. Auf diese Weise kann - im Unterscheid zu den bekannten Widerstandschweißverfahren - auf jegliche Maßnahmen zur Verhinderung von spannungsbedingten Verformungen der gefügten Bauteile verzichtet werden. Es brauchen auch keine anderen Vorkehrungen zur Verhinderung eines übermäßigen Wärmeeintrags in die Fügepartner ergriffen zu werden. Insbesondere ist es möglich, eine sehr hohe Schweißgeschwindigkeit anzuwenden, das heißt die Zykluszeiten bei der Massenfertigung von Heizkörpern entsprechend kurz zu halten. Das erfindungsgemäße Verfahren eignet sich also zur Herstellung von Heizkörpern mit äußerst geringen Toleranzen in Bezug auf die Sollgeometrie, so dass neben der Einsparung von Energie und kurzen Herstellzeiten nochmals große wirtschaftliche Fortschritte bei der Heizkörperherstellung erzielt werden.

Erfindungsgemäß wird des Weiteren vorgeschlagen, dass mindestens eines der durch Ultraschallschweißen zusammengefügten Teile aus Stahl und/oder mindestens eines der durch Ultraschallschweißen zusammengefügten Teile aus Aluminium oder einer Aluminiumlegierung besteht. Neben Reinaluminium mit einem Aluminiumgehalt von mindestens 99,5 Gew.-% konnte auch gezeigt werden, dass auch höher legierte Aluminiumlegierungen durch ein Ultraschalschweißen verbunden werden konnten. Auch für Verbindungen zwischen unterschiedlichen Materialien hat sich das erfindungsgemäß vorgeschlagene Ultraschallschweißen sowohl mit transversaler als auch mit torsionaler Anregung der Sonotrode als sehr dauerhaft und energieeffizient einsetzbar sowie Verzug in den verbundenen Bauteilen vermeidend herausgestellt.

Die Erfindung weiter ausgestaltend wird vorgeschlagen, dass mindestens eines der durch Ultraschallschweißen zusammengefügten Teile aus einer Aluminiumlegierung vom Typ AA3xxx, AA4xxx, AA5xxx, AA6xxx oder AA8xxx oder aus einem Verbundwerkstoff mit mindestens einer Schicht bestehend aus Reinaluminium und mindestens einer Schicht bestehend aus einer Aluminiumlegierung oder aus einem Verbundwerkstoff mit mindestens zwei Schichten aus Aluminiumlegierungen besteht. Die genannten Aluminiumlegierungstypen unterscheiden sich von ihrem Legierungsgrad deutlich von Reinaluminium 99,5 und können somit unterschiedlichsten Aspekten Rechnung tragen. Beispielsweise sind AA3xxx Legierungen sehr gut umformbar, weisen moderate Festigkeiten auf kombiniert mit gutem Korrosionsverhalten und guter Wärmeleitfähigkeit. AA4xxx Legierungen weisen erhöhte Si-Gehalte auf und schmelzen bei niedrigeren Temperaturen, so dass diese einfacher geschweißt werden können. AA5xxx Legierungen weisen höhere Mg-Gehalte und damit höhere Festigkeiten auf, so dass die Materialdicken entsprechend reduziert werden können. Die Aluminiumlegierungstypen AA6xxx sind aushärtbar und können durch einen Aushärtungsprozess hohe Festigkeiten bereitstellen. Die Aluminiumlegierungen vom Typ AA8xxx bieten eine gute Kombination aus Korrosionsbeständigkeit und Umformbarkeit, wohingegen die Verbundwerkstoffe spezifisch auf eine sehr gute Verbuindungsqualität zu den Heizkörperoberflächen sowie auf die erzielbaren Festigkeiten des Werkstoffs bei hoher Verbindungsqualität optimierbar sind. Entsprechende Verbundwerkstoffen können durch Walzplattieren oder simultanes Gießen hergestellt werden. Insbesondere hat sich gezeigt, dass die Verwendung des torsionalen Ultraschallschweißens besonders prozesssicher herstellbare Schweißverbindungen auch mit den oben genannten Aluminiumlegierungen erzeugen kann.

Eine sehr wirtschaftliche Herstellung lässt sich erfindungsgemäß dadurch erreichen, dass während des Ultraschallschweißens, vorzugsweise des torsionalen Ultraschallschweißens eine Mehrzahl an Sonotroden verwendet wird. Hierdurch wird ermöglicht, in einem Arbeitsgang mehrere Schweißpunkte zu setzen.

Gemäß einer besonders vorteilhaften Weiterbildung der Erfindung, ist eines der zu verbindenden Teile eine Heizplatte mit einer Mehrzahl von parallel zueinander verlaufenden Heizkanälen oder ein Rohrkörper einer sogenannten Heizwand mit mindestens einem Heizkanal, jeweils zur Durchströmung mit mindestens einem flüssigen Heizmedium, und das andere Teil ein Konvektor mit einer Mehrzahl von Konvektorkanälen, die zwischen einer Oberfläche des Konvektors und einer zugeordneten Oberfläche der Heizplatte oder des Rohrkörpers angeordnet sind, wobei optional ein Teilungsmaß der Heizplatte einem Teilungsmaß des Konvektors entspricht.

Das erfindungsgemäß bevorzugt in der Heizkörperfertigung eingesetzte torsionale Ultraschallschweißen ermöglicht es, Aluminium-Konvektoren auf äußerst effiziente Weise mit aus Stahlblech gefertigten Heizplatten oder anders geformten Rohrkörpern zu verbinden. Im Stand der Technik waren zwar auch bereits Konvektoren aus Aluminium vorgeschlagen worden. Eine praktische Anwendung dieses Materials bei Heizkörpern war bislang jedoch deshalb unterbleiben, weil eine rationelle zuverlässige und die notwendige Wärmeübertragung gewährleistende Art der Verbindung bislang nicht gelungen war. Alle anderen Schweißverfahren sind nämlich für diesen Anwendungsfall mehr oder weniger schlecht geeignet und rein mechanische Verfahren, wie beispielsweise das in der DE 199 21 144 A1 beschriebene Verklemmen oder Verkleben der Konvektoren mit den Heizplatten, haben sich letztlich als für die großtechnische Heizköperfertigung untauglich erwiesen.

Insbesondere bei Konvektoren, die als mäanderförmig gebogene Bleche ausgebildet sind, ist es vorteilhaft, wenn die zusammen zufügenden Teile jeweils mittels einer Mehrzahl von und mit einem Abstand zueinander angeordneten punktartigen Schweißstellen verbunden werden. Trotz des punktartigen Charakters des Ultraschallschweißens eignet sich dieses Verfahren somit auch für Schweißverbindungen im Bereich linien- oder streifenartiger Kontaktzonen zwischen den zu fügenden Bauteilen.

Auch eignet sich das Ultraschallschweißen zur Verbindung zweier Halbschalen einer Heizkörperplatte und zwar jeweils umlaufend in Randbereichen der Halbschalen, wobei die Sonotrode in diesem Fall transversal angeregt und während des Schweißvorgangs senkrecht zur Anregungsrichtung entlang der zu verschweißenden Randbereiche der Halbschalen bewegt wird. Auf diese Weise lassen sich rationell fluiddichte, ununterbrochene Schweißnähte erzeugen.

Eine vorteilhafte Ausgestaltung des erfindungsgemäßen Verfahrens besteht darüber hinaus darin, dass zwischen einer Mehrzahl in einer Reihe hintereinander angeordneter Sonotroden und dem auf die Heizplatte oder den Rohrkörper gefügten Konvektor eine periodische lineare Relativbewegung um das Teilungsmaß des Konvektors erfolgt und dass zwischen zwei aufeinander folgenden Relativbewegungen jeweils ein Schweißvorgang an den in einer Reihe angeordneten Sonotroden stattfindet, wobei die Sonotroden vor der vorgenannten Relativbewegung um einen Hub in eine Richtung senkrecht zu einer Tangentialebene an die Heizplatte oder den Rohrkörper angehoben und vor dem nachfolgenden Schweißvorgang wieder abgesenkt werden, wobei der Hub der Sonotroden zumindest der Höhe des Konvektors entspricht. Auf diese Weise erfolgt ein getaktes Verbinden des Konvektors, wobei der Fortschritt pro Takt jeweils einen Konvektorkanal beträgt und die Befestigung in einem Kontaktbereich zwischen benachbarten Konvektorkanälen ("Konvektorrinne") erfolgt.

Um auch bei vergleichsweise großer freier Länge der Sonotroden eine unzulässige seitliche Auslenkung während des Schweißvorgangs und bei der Zustellbewegung zu vermeiden ist es sinnvoll, wenn die Sonotroden während des gesamten Hubs in Führungen, vorzugsweise in Form eines mit Durchbrüchen für die Sonotroden versehenen Führungsbalkens, geführt werden.

Eine weitere Ausgestaltung der Erfindung sieht vor, dass eine Heizplatte oder ein Rohrkörper aus Blech, vorzugsweise aus Stahlblech, mit einer Dicke zwischen 1,0 mm und 1,5 mm und ein Konvektor aus Blech, vorzugsweise einem aus Aluminium oder einer Aluminiumlegierung bestehenden Blech mit einer Dicke, gemäß der Erfindung zwischen 0,10 mm und 0,4 mm, jeweils durch Umformprozesse hergestellt wird und die vorgenannten Teile anschließend vorzugsweise unter Verwendung eines torsionalen Ultraschallschweißens zusammen gefügt werden. Als vorteilhaft hat sich in Bezug auf Materialverbrauch, Korrosionsbeständigkeit, mechanische Eigenschaften und Wärmeleitfähigkeit des Heizkörpers herausgestellt, die Dicke des Stahlblechs vorzugsweise 1,1 mm bis 1,25 mm beträgt und die Dicke des aus Aluminium oder einer Aluminiumlegierung bestehenden Blechs 0,1 mm bis 0,2 mm.

Im Zuge breit angelegter Versuchsreihen hatte sich als besonders vorteilhaft herausgestellt, dass die Schweißdauer pro punktartiger Schweißstelle zwischen 150 ms und 300 ms, vorzugsweise zwischen 200 ms und 250 ms betragen kann, um eine prozesssichere Verbindung zu gewährleisten. Der Schweißdruck, das heißt der Anpressdruck der Sonotrode an die Fügepartner, das heißt der Druck, mit dem eine Kontaktfläche einer Sonotrode auf eine Oberfläche des mit einem andren hinreichend fixierten Teil zu verbindenden Teils gepresst wird, kann beispielsweise zwischen 20 N/mm2 und 25 N/mm² betragen.

Eine optimale Abstimmung zwischen Energieeffizienz und Produktionsgeschwindigkeit liegt vor, wenn die Leistung, mit der eine Sonotrode beim Schweißvorgang beaufschlagt wird, zwischen 1000 Watt und 2000 Watt beträgt.

Besonders vorteilhaft ist es darüber hinaus, wenn die verwendeten Sonotroden im Bereich einer den oberen Fügepartner kontaktierenden Stirnfläche einen Außendurchmesser zwischen 4 mm und 6 mm besitzen. Die Schwingungsamplitude der Sonotroden, gemessen jeweils an deren Außendurchmesser eines Kontaktbereichs, kann zwischen 60 µm und 140 µm, vorzugsweise zwischen 80 µm und 120 µm betragen, um eine schnelle und sichere Verschweißung zu gewährleisten. Dies ist für das torsionale Ultraschallschweißen ein vergleichsweise hoher Wert. Er hat sich jedoch für die zu lösende Aufgabe im Bereich der Heizkörperfertigung als besonders vorteilhaft herausgestellt.

Insbesondere im Hinblick auf die Verbindung von Aluminium-Konvektoren mit Stahlblech-Heizplatten bzw. -Rohrkörpern hat sich als sehr vorteilhaft herausgestellt, die Dicke des Konvektorblechs gegenüber der Dicke der aus Stahlblech gefertigten Konvektoren drastisch zu reduzieren. Während die Stahlblechkonvektoren typischerweise eine Dicke im Bereich zwischen 0,4 mm und 0,5 mm besitzen, lässt sich die Dicke bei Verwendung von Aluminiumblech bzw. -folie aufgrund der ausgezeichneten Wärmeleitfähigkeitseigenschaften des Aluminiums deutlich reduzieren, ohne die Leistungsfähigkeit des Konvektors und damit auch des Heizkörpers negativ zu beeinflussen. Die Dickenreduzierung beim Blech der Aluminiumkonvektoren führt somit zu einer erheblichen Materialeinsparung gegenüber Heizkörpern mit Stahlkonvektoren. Neben der Kosteneinsparung durch den reduzierten Materialeinsatz ergibt sich auch ein deutlich reduziertes Gewicht des Heizkörpers, was insbesondere von den Installateuren als sehr angenehm empfunden wird. Schließlich erlaubt die reduzierte Dicke des Aluminiumbleches erst eine erfolgreiche Anwendung des Ultraschallschweißens, da ein rascher Wärmedurchgang zu dem unteren Stahlblech stattfinden kann, was bei einer Verbindung Stahl-Stahl nicht der Fall wäre.

Die der Erfindung zugrunde liegende Aufgabe wird durch einen Heizkörper mit mindestens zwei Teilen, die mittels einer Schweißverbindung zusammengefügt sind dadurch gelöst, dass die Schweißverbindung unter Verwendung eines Ultraschallschweißens hergestellt ist, insbesondere unter Verwendung eines torsionalen Ultraschallschweißens oder unter Verwendung eines transversalem Ultraschallschweißen hergestellt ist.

Vorzugsweise besteht mindestens eines der Teile des Heizkörpers aus Aluminium oder einer Aluminiumlegierung und ist mit dem anderen Teil des Heizkörpers durch torsionales oder transversales Ultraschallschweißen verbunden.

### Ausführungsbeispiel

Das erfindungsgemäße Verfahren wird nachfolgend anhand eines Ausführungsbeispiels einer Vorrichtung zur Durchführung eines Verfahrens mit trosionalem Ultraschallschweißen sowie eines damit hergestellten Heizkörpers unter Bezugnahme auf die beiliegende Zeichnung näher erläutert.

Es zeigt:
- Fig. 1:: Eine Prinzipskizze wesentlicher Komponenten einer Vorrichtung zum torsionalen Ultraschallschweißen,
- Fig. 2:: eine Ansicht auf die Schweißfläche einer Sonotrode der Vorrichtung gemäß Figur 1,
- Fig. 3:: einen Schnitt durch einen Heizkörper mit einer Heizplatte und einem auf einer Seite damit verschweißten Konvektor,
- Fig. 4:: eine Vorrichtung zum Verbinden eines Aluminiumkonvektors mit einer aus Stahl bestehenden Heizplatte unter Verwendung eines torsionalen Ultraschallschweißens,
- Fig. 4a:: eine perspektivische Ansicht der Sonotrode der Vorrichtung gemäß Figur 4 und
- Fig. 5:: eine Draufsicht auf einen mit einer Heizplatte verschweißten Konvektor mit den reihenweise angeordneten Schweißpunkten.

Dem Grundsatz nach besteht jedes Ultraschall-Schweißsystem aus den Komponenten Generator, Konverter und Sonotrode. Bedarfsweise kann zwischen dem Konverter und der Sonotrode noch ein so genanntes Transformatorstück, auch Booster genannt, eingesetzt werden.

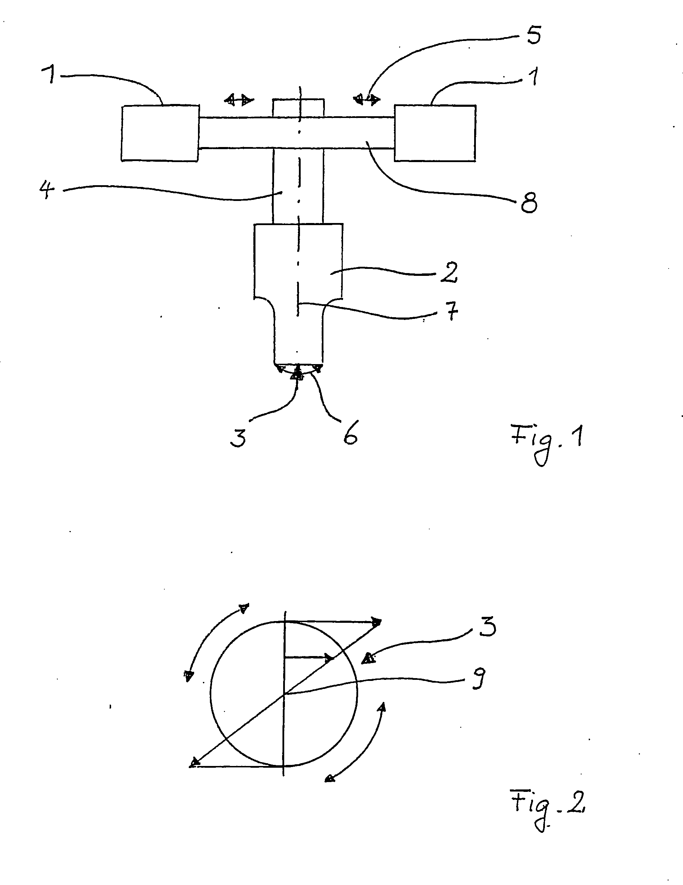

Der typischerweise mit Netzspannung gespeiste und in Figur 1 nicht dargestellte Generator wandelt die Netzfrequenz in eine hochfrequente Schwingung im Bereich zwischen 20.000 Hz und 50.000 Hz um. Über Leitungen, die in dem Prinzipschema gemäß Figur 1 gleichfalls nicht dargestellt sind, wird die Hochfrequenzschwingung an den bzw. die Konverter 1 weitergegeben. Die Konverter 1 erzeugen aus den elektrischen Schwingungen mit Hilfe von Piezoelementen mechanische Schwingungen gleicher Frequenz, die letztlich auf die Sonotrode 2 übertragen werden. Die Sonotrode 2 wird auch "Schwinger", "Resonator" oder "Schallgeber" genannt und leitet die Ultraschallenergie über eine an einem freien Ende angeordnete Kontaktfläche 3 (die später flächenmäßig im Wesentlichen mit der Schweißfläche übereinstimmt) weiter. Zwischen den Konvertern 1 und der Sonotrode 2 befindet sich ein Schwingungsumsetzer 4, auch "Booster" oder "Transformatorstück" genannt, der die longitudinalen Schwingungen oder Konverter(veranschaulicht durch die Pfeile 5) in Drehschwingungen (veranschaulicht durch einen Doppelpfeil 6 an der Kontaktfläche 3) um eine Achse 7 der Sonotrode 2 und des Schwingungsumsetzers 4 umwandelt. Koppelstücke 8, die sich jeweils zwischen einem Konverter 1 und dem Schwingungsumsetzer 4 befinden, übertragen die um 180° phasenverschobenen Schwingungen der beiden Konverter 1 über einen Hebel (im Abstand von der Achse 7) auf den Schwingungsumsetzer 4, der wie die Sonotrode 2 eine oszillierende Drehbewegung ausführt.

Die Darstellung gemäß Figur 2 veranschaulicht, dass in einem Mittelpunkt 9 der Kontaktfläche 3 der Sonotrode 2 im Ergebnis keine Bewegung stattfindet und dass der Hub, vom Mittelpunkt 9 aus betrachtet, linear mit dem Radius ansteigt, um am Umfang des die Kontaktfläche 3 begrenzenden Kreises ein Maximum (A_{max.}) erreichen. Auf diametral gegenüber liegenden Punkten sind die Bewegungen betragsmäßig gleich, erfolgen jedoch in entgegengesetzte Richtungen. Jeder einzelne Punkt der Kontaktfläche 3 vollführt also jeweils eine Bewegung auf einer Kreisbahn, wobei die Amplitude ca. 80 µm bis 120 µm (bzw. 2 x 40 µm bis 2 x 60 µm) beträgt.

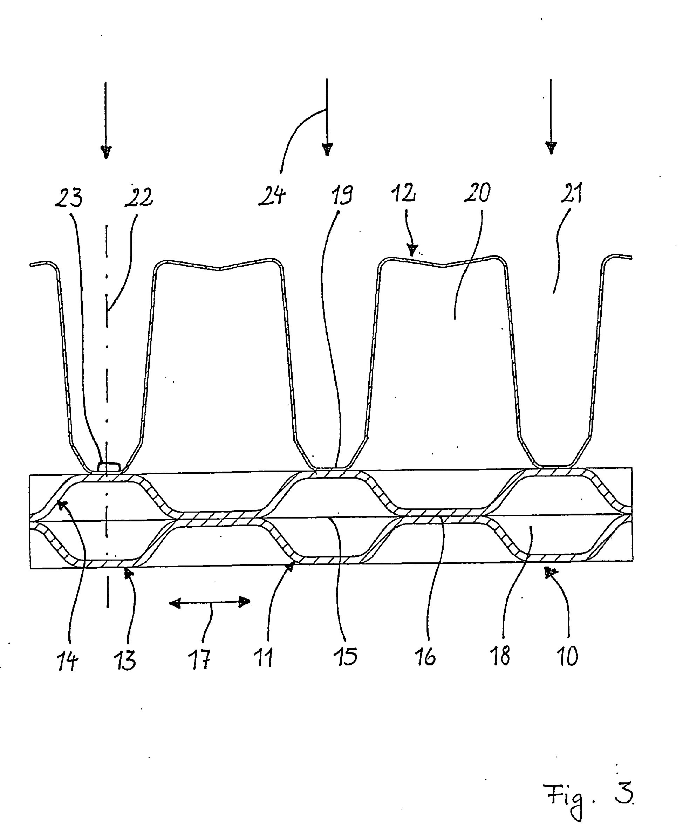

Figur 3 zeigt in einem Querschnitt einen Abschnitt eines an sich bekannten Plattenheizkörpers, der eine Heizplatte 11 und einen damit verschweißten Konvektor 12 umfasst. Die Heizplatte 11 besteht aus einer unteren, durch Presswerkzeuge umgeformten und aus Stahlblech bestehenden Halbschale 13 und einer oberen, zu einer Mittelebene 15 der Heizplatte 11 symmetrisch angeordneten oberen Halbschale 14. Die beiden Halbschalen 13, 14 sind unter Verwendung eines Widerstandsschweißen oder eines transversalen Ultraschallschweißens im Falle von Aluminium-Halbschalen an den nicht dargestellten Rändern sowie in Kontaktstreifen 16 miteinander verbunden. In eine Richtung des Doppelpfeils 17 betrachtet wechseln sich die Kontaktstreifen 16 mit Heizkanälen 18 ab, die beidseitig von jeweils einer Halbschale 13, 14 begrenzt werden und im Gebrauch des Plattenheizkörpers 10 von einem Wärmeträgermedium, insbesondere Wasser, durchströmt werden.

Der Konvektor 12 besteht aus einem umgeformten Aluminiumblech, das im Querschnitt eine spezielle Mäanderform besitzt. Die Verbindung des Konvektors 12 mit der Heizplatte 11 erfolgt im Bereich von Kontaktstreifen 19, die sich außenseitig an der oberen Halbschale 14 im Bereich der Heizkanäle 18 befinden. Im Bereich der Kontaktstreifen 19 sind sowohl der Konvektor 12 als auch die obere Halbschale 14 eben ausgeführt. Der Konvektor 12 ist so geformt, dass im Bereich der Kontaktstreifens 16 der Halbschalen 13, 14 zwischen der Heizplatte 11 und dem Konvektor 12 ein geschlossener Konvektorkanal 20 gebildet wird, der in der Einbauposition des Heizkörpers 10 in vertikale Richtung verläuft und durch den erwärmte Luft nach Art eines Kamins nach oben strömt. In den Bereichen zwischen benachbarten Konvektorkanälen 20 befinden sich oberhalb der Kontaktstreifen 19 Konvektorrinnen 21, die sich in ihrem Querschnitt von der oberen Öffnung bis hin zu dem Kontaktstreifen 19 verjüngen. Die Konvektorrinnen und auch die Heizkanäle 18 sind jeweils symmetrisch zu einer Mittelebene 22 aufgebaut. Das Konvektorblech 12 besteht im vorliegenden Ausführungsbeispiel aus einer Aluminiumlegierung mit den folgenden Legierungsbestandteilen in Gewichtsprozent:

| | | | | |
|---|---|---|---|---|
| | | Si | ≤ | 0,7%, |
| | | Fe | ≤ | 0,8%, |
| | | Cu | ≤ | 0,4% |
| 0,25% | ≤ | Mn | ≤ | 1,8% |
| | | Mg | ≤ | 1,0% |
| | | Cr | ≤ | 0,3%, |
| | | Zn | ≤ | 0,5%, |

Rest Al und Verunreinigungen einzeln maximal 0,05 %, in Summe maximal 0,15 %. Diese Aluminiumlegierung zeichnet sich durch eine moderate Festigkeit bei gleichzeitig gutem Korrosionsbeständigkeit und Wärmeleitfähigkeit aus.

Die Schweißverbindung zwischen dem Konvektor 12 und der Heizplatte 11 erfolgt symmetrisch zu der jeweiligen Mittelebene 22 der Konvektorrinnen 21 in den Kontaktstreifen 19 und zwar in Form von Schweißpunkten 23, deren Durchmesser geringfügig kleiner als die Breite des Kontaktstreifens 19 ist und die unter Verwendung eines torsionalen Ultraschallschweißens erzeugt werden. Jeweils eine zu einer Schweißvorrichtung gehörige Sonotrode 2, die in Figur 3 nicht dargestellt ist, wird entlang der Mittelebene 22 in Richtung des Pfeils 24 in die Konvektorrinnen eingeführt und dort unter Druck auf die zu diesem Zweck lagefixierten Fügepartner (Heizplatte 11 und Konvektor 12) aufgesetzt. Der Konvektor 12 muss im Bereich des jeweils mit einer Sonotrode 2 beaufschlagten Kontaktstreifens 19 eine gewisse Bewegungsfreiheit besitzen, um der Ultraschall-Anregung durch Mikro-Bewegungen folgen zu können.

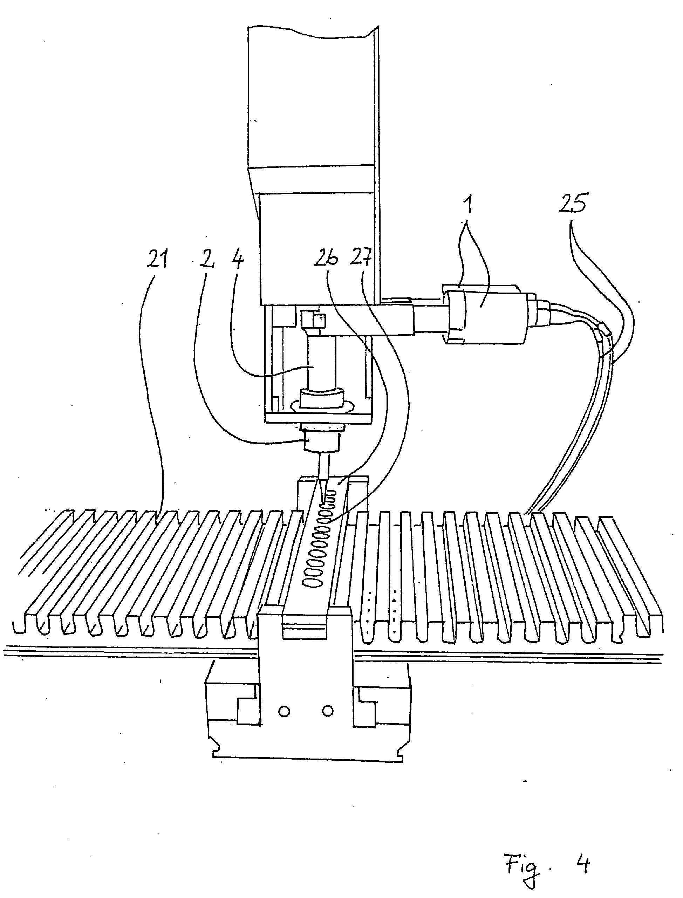

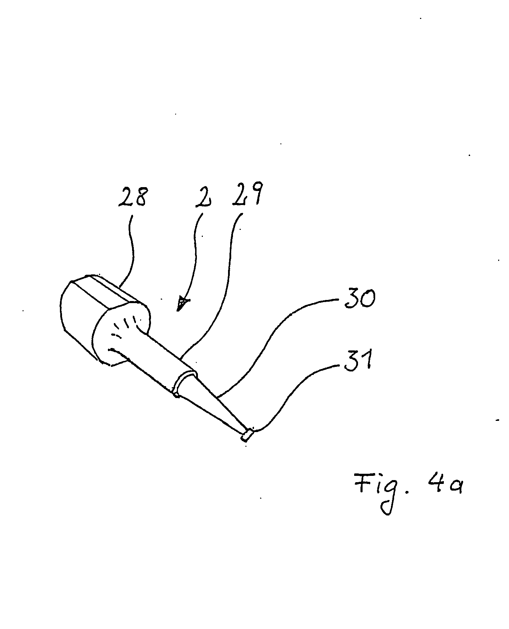

Figur 4 zeigt schematisch den Aufbau einer Ultraschall-Schweißvorrichtung für torsionales Schweißen, die aus zwei nicht dargestellten Ultraschallgeneratoren, aus zwei diese mit jeweils einem Konverter 1 verbindenden Hochfrequenzleitungen 25, aus einem Schwingungsumsetzer 4, an dem beide Konverter 1 an um 180° versetzten Punkten angreifen, sowie aus einer Sonotrode 2, die mit dem Schwingungsumsetzer 4 gekoppelt ist, besteht. Die gezeigte Vorrichtung besitzt lediglich eine einzige Sonotrode 2, die zum einen in Richtung der Konvektorrinnen 21 verschiebbar ist. Parallel zu den Konvektorrinnen 21 verläuft ein Führungsbalken 26, der eine der Zahl der Schweißpunkte 23 pro Konvektorrinne 21 entsprechende Anzahl von Durchbrüchen 27 aufweist, durch die die Sonotrode 2 bei einem Abwärtshub in die Konvektorrinne 21 hinein geführt und somit in ihre Schweißposition in radiale Richtung formschlüssig positioniert wird.

Die Herstellung des erfindungsgemäßen Heizkörpers 10 erfolgt somit dergestalt, dass die Fügepartner in Form der Heizplatte 11 und des Konvektors 12 sukzessive mit einem Hub der Teilung des Konvektors 12, d.h. des Abstandes zwischen den Mittelebenen 22 zweier benachbarter Konvektorrinnen 21 in eine Richtung senkrecht zu den Konvektorrinnen 21, d.h. senkrecht zu dem Führungsbalken 26, vorgeschoben wird. In der jeweils gerade unter dem Führungsbalken 26 befindlichen Konvektorrinne 21 werden sodann, an einem Ende der Konvektorrinne 21 beginnend, die Schweißpunkte 23 gesetzt, deren Abstand dem Abstand der Durchbrüche 27 in dem Führungsbalken 26 entspricht. Im vorliegenden Fall sind bei einem Konvektor 12 mit einer Höhe von 32 bis 46 mm 12 Schweißpunkte 23 vorhanden, wobei der Abstand benachbarter Schweißpunkte ca. 30 bis 40 mm beträgt.

Figur 4a zeigt eine Sonotrode 2 in einer vergrößerten perspektivischen Ansicht. Die Sonotrode 2 weist einen verdickten Kopfteil 28 auf, mit dem sie dem Schwingungsumsetzer 4 zugewandt ist. Daran schließt sich mit einem Übergangsradius ein im Wesentlichen zylindrisches Mittelteil 29 an, welches zu dem gegenüber liegenden Ende der Sonotrode 2 hin von einem kegelförmigen Spitzenteil 30 gefolgt wird. Der Durchmesser im Bereich der Kontaktfläche 3 der Sonotrode 2 beträgt im vorliegenden Fall 5 mm.

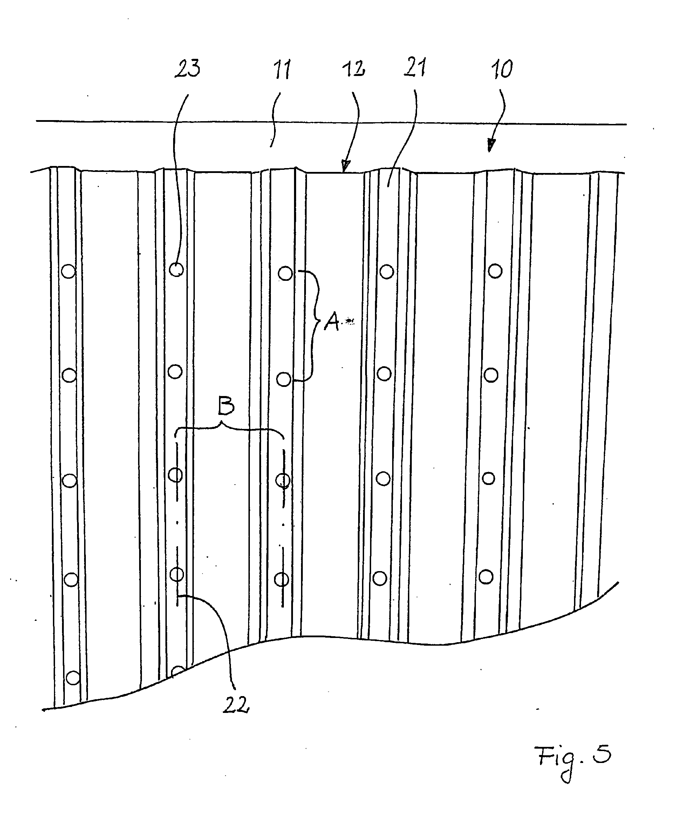

Figur 5 zeigt schließlich noch eine Draufsicht auf den Plattenheizkörper 10, bei dem der Konvektor 12 mit der Heizplatte 11 durch ein Raster von Schweißpunkten 23 miteinander verbunden sind. Die Schweißpunkte 23 befinden sich innerhalb einer Konvektorrinne 21 in einem Abstand A von 30 bis 40 mm nebeneinander. Der Abstand B der Mittelebenen 22 zweier benachbarter Konvektorrinnen beträgt ungefähr 33 mm. Beispielsweise wurden mit einer Schweißleistung von etwa 1400 W bei einem Anpressdruck von 20 bis 25 N/mm2 sowie einer Schweißdauer von ca. 200ms sehr gute Schweißergebnisse erzielt.

### Bezugszeichenliste

- 1: Konverter
- 2: Sonotrode
- 3: Kontaktfläche
- 4: Schwingungsumsetzer
- 5: Doppelpfeil
- 6: Pfeil
- 7: Achse
- 8: Koppe|stück
- 9: Mittelpunkt
- 10: Plattenheizkörper
- 11: Heizplatte
- 12: Konvektor
- 13: Halbschale
- 14: Halbschale
- 15: Mittelebene
- 16: Kontaktstreifen
- 17: Doppelpfeil
- 18: Heizkanal
- 19: Kontaktstreifen
- 20: Konvektorkanal
- 21: Konvektorrinne
- 22: Mittelebene
- 23: Schweißpunkt
- 24: Pfeil
- 25: Hochfrequenzleitung
- 26: Führungsbalken
- 27: Durchbruch
- 28: Kopfteil
- 29: Mittelteil
- 30: Spitzenteil
- A: Abstand
- B: Abstand

## Patentansprüche

1. Verfahren zur Herstellung eines Heizkörpers (10), wobei mindestens zwei Teile des Heizkörpers (10) unter Verwendung eines Schweißverfahrens zusammengefügt werden, **dadurch gekennzeichnet, dass** mindestens zwei Teile unter Verwendung eines Ultraschallschweißens, vorzugsweise unter Verwendung eines torsionalen Ultraschallschweißens oder transversalen Ultraschallschweißens, zusammengefügt werden, wobei eine Dicke eines der durch Ultraschallschweißen zusammengefügten Teile zwischen 0,1 mm und 0,4 mm beträgt.

2. Verfahren nach Anspruch 1, **dadurch gekennzeichnet, dass** mindestens eines der durch Ultraschallschweißen zusammengefügten Teile aus Stahl und/oder mindestens eines der durch Ultraschallschweißen zusammengefügten Teile aus Aluminium oder einer Aluminiumlegierung besteht.

3. Verfahren nach Anspruch 2, **dadurch gekennzeichnet, dass** mindestens eines der durch Ultraschallschweißen zusammengefügten Teile aus einer Aluminiumlegierung vom Typ AA3xxx, AA4xxx, AA5xxx, AA6xxx, AA8xxx oder aus einem Verbundwerkstoff mit mindestens einer Schicht bestehend aus Reinaluminium und mindestens einer Schicht bestehend aus einer Aluminiumlegierung oder aus einem Verbundwerkstoff mit mindestens zwei Schichten aus Aluminiumlegierungen besteht.

4. Verfahren nach einem der Ansprüche 1 bis 3, **dadurch gekennzeichnet, dass** während des Ultraschallschweißens, vorzugsweise während des torsionalen Ultraschallschweißens gleichzeitig eine Mehrzahl an Sonotroden (2) verwendet wird.

5. Verfahren nach einem der Ansprüche 1 bis 4, **dadurch gekennzeichnet, dass** ein Teil eine Heizplatte (11) mit einer Mehrzahl von parallel zueinander verlaufenden Heizkanälen (18) oder ein Rohrkörper einer Heizwand, jeweils zur Durchströmung mittels mindestens eines flüssigen Heizmediums, ist und ein Teil ein Konvektor (12) mit einer Mehrzahl von Konvektorkanälen (20) ist, die zwischen einer Oberfläche des Konvektors (12) und einer zugeordneten Oberfläche der Heizplatte (11) oder des Rohrkörpers angeordnet sind, wobei im Falle einer gewellten Heizplatte (11) ein Teilungsmaß der Heizplatte (11) einem Tellungsmaß des Konvektors (12) entspricht.

6. Verfahren nach einem der Ansprüche 1 bis 5, **dadurch gekennzeichnet, dass** die zu sammengefügten Teile jeweils mittels einer Mehrzahl von linear hintereinander und mit einem Abstand zueinander angeordneten punktartigen Schweißstellen verbunden werden.

7. Verfahren nach Anspruch 5 und 6, **dadurch gekennzeichnet, dass** zwischen einer Mehrzahl in einer Reihe hintereinander angeordneten Sonotroden (2) und dem auf die Heizplatte (11) gefügten Konvektor (12) eine periodische lineare Relativbewegung um das gemeinsame Teilungsmaß von Heizplatte (11) und Konvektor (12) erfolgt und dass zwischen zwei aufeinander folgenden Relativbewegungen jeweils ein Schweißvorgang stattfindet, wobei die Sonotroden (2) vor der vorgenannten Relativbewegung um einen Hub in einer Richtung senkrecht zu einer Tangentialebene an die Heizplatte (11) angehoben und vor dem folgenden Schweißvorgang wieder abgesenkt werden, wobei der Hub mindestens der Höhe des Konvektors (12) entspricht.

8. Verfahren nach Anspruch 7, **dadurch gekennzeichnet, dass** die Sonotroden (2), vorzugsweise während des gesamten Hubs, in Führungen, vorzugsweise in Form eines mit Durchbrüchen für die Sonotroden (2) versehenen Führungsbalkens (26), geführt werden.

9. Verfahren nach einem der Ansprüche 1 bis 8, **dadurch gekennzeichnet, dass** die Dicke eines der durch Ultraschallschweißen zusammengefügten Teile weniger als 0,3 mm, vorzugsweise weniger als 0,2 mm beträgt.

10. Verfahren nach einem der Ansprüche 1 bis 9, **dadurch gekennzeichnet, dass** eine Heizplatte (11) aus Blech, vorzugsweise aus Stahlblech, mit einer Dicke zwischen 1,0 mm und 1,5 mm, vorzugsweise zwischen 1,11 mm und 1,25 mm und ein Konvektor (12) aus Blech, vorzugsweise aus einer Aluminium enthaltenden Legierung, mit einer Dicke zwischen 0,1 mm und 0,4 mm, vorzugsweise zwischen 0,12 mm und 0,2 mm, hergestellt wird und die vorgonannten Teile anschließend unter Verwendung eines torsionalen Ultraschallschweißens zusammengefügt werden.

11. Verfahren nach einem der Ansprüche 1 bis 10, **dadurch gekennzeichnet, dass** die Schweißdauer pro punktartiger Schweißstelle zwischen 150 ms und 300 ms, vorzugsweise zwischen 200 ms und 250 ms beträgt.

12. Verfahren nach einem der Ansprüche 1 bis 11, **dadurch gekennzeichnet, dass** der Schweißdruck, mit dem eine Kontaktfläche (3) einer Sonotrode (2) einer Schweißvorrichtung auf eine Oberfläche eines mit einem anderen Teil zu verbindenden Teil gepresst wird, zwischen 20 N/mm² und 25 N/mm² beträgt.

13. Verfahren nach einem der Ansprüche 1 bis 12, **dadurch gekennzeichnet, dass** die Leistung, mit der eine Sonotrode (2) beaufschlagt wird, zwischen 1000 W und 2000 W beträgt.

14. Heizkörper mit mindestens zwei Teilen, die mittels einer Schweißverbindung zusammengefügt sind, **dadurch gekennzeichnet, dass** die Schweißverbindung unter Verwendung eines Ultraschallschweißens hergestellt ist, vorzugsweise unter Verwendung eines torsionalen oder transversalem Ultraschallschweißens, wobei eine Dicke eines der durch Ultraschallschweißen zusammongefügten Teile zwischen 0,1 mm und 0,4 mm beträgt.

15. Heizkörper nach Anspruch 14, **dadurch gekennzeichnet, dass** mindestens ein Teil des Heizkörpers aus Aluminium oder einer Aluminiumlegierung besteht, wobei vorzugsweise Aluminiumlegierungen vom Typ AA3xxx, AA4xxx, AA5xxx, AA6xxx oder vom Typ AA8xxx verwendet werden und dieser Teil zumindest mit einem anderen Teil des Heizkörpers durch torsionales oder transversales Ultraschallschweißen stoffschlüssig verbunden ist.

16. Heizkörper nach Anspruch 15, **dadurch gekennzeichnet, dass** zumindest der Konvektor des Heizkörpers aus Aluminium oder einer Aluminiumlegierung besteht.

17. Heizkörper nach Anspruch 14 bis 16, **dadurch gekennzeichnet, dass** ein Teil des Heizkörpers eine Heizplatte (11) mit einer Mehrzahl von parallel zueinander verlaufenden Heizkanälen (18) oder ein Rohrkörper einer Heizwand, jeweils zur Durchströmung mittels eines flüssigen Heizmediums ist und ein Teil ein Konvektor (12) mit einer Mehrzahl von Konvektorkanälen (20) Ist, die zwischen einer Oberfläche des Konvektors (12) und einer zugeordneten Oberfläche der Heizplatte (11) oder des Rohrkörpers angeordnet sind, wobei optional ein Teilungsmaß der Heizplatte (11) einem Teilungsmaß des Konvektors (12) entspricht.

## Claims

1. A method for the manufacture of a heater (10), wherein at least two parts of the heater (10) are joined together using a welding method, **characterised in that** at least two parts are joined together using ultrasonic welding, preferably using torsional ultrasonic welding, or transversal ultrasonic welding, wherein a thickness of one of the parts joined together by ultrasonic welding is between 0.1 mm and 0.4 mm.

2. The method in accordance with Claim 1, **characterised in that** at least one of the parts joined together by ultrasonic welding consists of steel, and/or at least one of the parts joined together by ultrasonic welding consists of aluminium or an aluminium alloy.

3. The method in accordance with Claim 2, **characterised in that** at least one of the parts joined together by ultrasonic welding consists of an aluminium alloy of the type AA3xxx, AA4xxx, AA5xxx, AA6xxx, AA8xxx, or of a composite material with at least one layer consisting of pure aluminium and at least one layer consisting of an aluminium alloy, or of a composite material with at least two layers of aluminium alloys.

4. The method in accordance with one of the Claims 1 to 3, **characterised in that** during the ultrasonic welding, preferably during the torsional ultrasonic welding, a multiplicity of sonotrodes (2) are used at the same time.

5. The method in accordance with one of the Claims 1 to 4, **characterised in that** one part is a heating plate (11) with a multiplicity of heating channels (18) running parallel to one another, or a tubular body of a heating wall, in each case so as to enable the throughflow of at least one fluid heating medium, and one part is a convector (12) with a multiplicity of convector channels (20), which are arranged between a surface of the convector (12) and an associated surface of the heating plate (11) or the tubular body, wherein in the case of a corrugated heating plate (11), one pitch of the heating plate (11) corresponds to one pitch of the convector (12).

6. The method in accordance with one of the Claims 1 to 5, **characterised in that** the parts that are joined together are connected in each case by means of a multiplicity of welding points arranged linearly one behind another, and spaced apart from one another.

7. The method in accordance with Claims 5 and 6, **characterised in that** a periodic linear relative movement by the common pitch of heating plate (11) and convector (12) takes place between a multiplicity of sonotrodes (2) arranged in a row one behind another, and the convector (12) joined onto the heating plate (11), and **in that** in each case a welding process takes place between two consecutive relative movements, wherein before the above-cited relative movement the sonotrodes (2) are raised through an upstroke in a direction at right angles to a tangential plane on the heating plate (11), and before the following welding process are lowered once again, wherein the upstroke corresponds to at least the height of the convector (12).

8. The method in accordance with Claim 7, **characterised in that** the sonotrodes (2), preferably during the whole of the upstroke, are guided in guides, preferably in the form of a guide bar (26) provided with gaps for the sonotrodes (2).

9. The method in accordance with one of the Claims 1 to 8, **characterised in that** the thickness of one of the parts joined together by ultrasonic welding is less than 0.3 mm, preferably less than 0.2 mm.

10. The method in accordance with one of the Claims 1 to 9, **characterised in that** a heating plate (11) is manufactured from a sheet metal, preferably from a steel sheet, with a thickness of between 1.0 mm and 1.5 mm, preferably of between 1.11 mm and 1.25 mm, and a convector (12) is manufactured from a sheet metal, preferably of an alloy containing aluminium, with a thickness of between 0.1 mm and 0.4 mm, preferably of between 0.12 mm and 0.2 mm, and the above-cited parts are subsequently joined together using torsional ultrasonic welding.

11. The method in accordance with one of the Claims 1 to 10, **characterised in that** the duration of the welding process per welding point is between 150 ms and 300 ms, preferably between 200 ms and 250 ms.

12. The method in accordance with one of the Claims 1 to 11, **characterised in that** the welding pressure with which a contact surface (3) of a sonotrode (2) of a welding device is pressed onto a surface of a part to be connected with another part, is between 20 N/mm² und 25 N/mm².

13. The method in accordance with one of the Claims 1 to 12, **characterised in that** the power applied to a sonotrode (2) is between 1000 W and 2000 W.

14. A heater with at least two parts, which are joined together by means of a welded joint, **characterised in that** the welded joint is manufactured using ultrasonic welding, preferably using torsional or transversal ultrasonic welding, wherein a thickness of one of the parts joined together by ultrasonic welding is between 0.1 mm and 0.4 mm.

15. The heater in accordance with Claim 14, **characterised in that** at least one part of the heater consists of aluminium or an aluminium alloy, wherein aluminium alloys of type AA3xxx, AA4xxx, AA5xxx, AA6xxx, or of type AA8xxx are preferably used, and the said part is materially bonded with at least one other part of the heater by means of torsional or transversal ultrasonic welding.

16. The heater in accordance with Claim 15, **characterised in that** at least the convector of the heater consists of aluminium or an aluminium alloy.

17. The heater in accordance with Claims 14 to 16, **characterised in that** one part of the heater is a heating plate (11) with a multiplicity of heating channels (18) running parallel to one another, or a tubular body of a heating wall, in each case so as to enable the throughflow of a fluid heating medium, and one part is a convector (12) with a multiplicity of convector channels (20), which are arranged between a surface of the convector (12) and an associated surface of the heating plate (11) or the tubular body, wherein one pitch of the heating plate (11) optionally corresponds to one pitch of the convector (12).

## Revendications

1. Procédé de fabrication d'un corps de chauffage (10), pour lequel au moins deux parties du corps de chauffage (10) sont assemblées en utilisant un procédé de soudage, **caractérisé en ce qu'**au moins deux parties sont assemblées en utilisant un soudage par ultrasons, de préférence en utilisant un soudage par ultrasons torsionnel ou un soudage par ultrasons transversal, pour lequel une épaisseur d'une des parties assemblées par soudage à ultrasons se situe entre 0,1 mm et 0,4 mm.

2. Procédé selon la revendication 1, **caractérisé en ce qu'**au moins une des parties assemblées par soudage à ultrasons est en acier et/ou au moins une des parties assemblées par soudage à ultrasons est en aluminium ou en un alliage d'aluminium.

3. Procédé selon la revendication 2, **caractérisé en ce qu'**au moins une des parties assemblées par soudage à ultrasons est dans un alliage d'aluminium du type AA3xxx, AA4xxx, AA5xxx, AA6xxx, AA8xxx ou dans un matériau composite avec au moins une couche composée d'aluminium pur et au moins d'une couche composée d'un alliage d'aluminium ou d'un matériau composite avec au moins deux couches d'alliages d'aluminium.

4. Procédé selon l'une quelconque des revendications 1 à 3, **caractérisé en ce que** pendant le soudage à ultrasons, de préférence pendant le soudage à ultrasons torsionnel, une pluralité de sonotrodes (2) est simultanément utilisée.

5. Procédé selon l'une quelconque des revendications 1 à 4, **caractérisé en ce qu'**une partie est une plaque chauffante (11) avec une pluralité de conduits de chauffage (18) passant parallèlement les uns aux autres ou un corps tubulaire d'un panneau chauffant, respectivement pour la traversée au moyen d'au moins un milieu de chauffage liquide et une partie est un convecteur (12) avec une pluralité de conduits de convecteur (20) qui sont disposés entre une surface supérieure du convecteur (12) et une surface supérieure attribuée de la plaque chauffante (11) ou du corps tubulaire, pour lequel dans le cas d'une plaque chauffante (11) ondulée, une mesure de division de la plaque chauffante (11) correspond à une mesure de division du convecteur (12).

6. Procédé selon l'une quelconque des revendications 1 à 5, **caractérisé en ce que** les parties assemblées sont reliées respectivement au moyen d'une pluralité de soudures par points disposées de façon linéaire les unes derrière les autres et à distance les unes des autres.

7. Procédé selon la revendication 5 et 6, **caractérisé en ce qu'**entre une pluralité d'une série de sonotrodes (2) disposées les unes derrière les autres et le convecteur (12) joint à la plaque chauffante (11) a lieu un mouvement relatif linéaire périodique d'une mesure de division commune de la plaque chauffante (11) et du convecteur (12) et **en ce qu'**entre deux mouvements relatifs successifs a respectivement lieu une opération de soudage, pour lequel les sonotrodes (2) sont soulevées d'une course avant le mouvement relatif précité dans une direction perpendiculairement à un plan tangentiel à la plaque chauffante (11) et sont à nouveau abaissées avant l'opération de soudage suivante, pour lequel la course correspond au moins à la hauteur du convecteur (12).

8. Procédé selon la revendication 7, **caractérisé en ce que** les sonotrodes (2) sont de préférence guidées pendant toute la course, dans des guidages, de préférence sous la forme d'une barre de guidage (26) munie de passages pour les sonotrodes (2).

9. Procédé selon l'une quelconque des revendications 1 à 8, **caractérisé en ce que** l'épaisseur d'une des parties assemblées par soudage à ultrasons est inférieure à 0,3 mm, de préférence inférieure à 0,2 mm.

10. Procédé selon l'une quelconque des revendications 1 à 9, **caractérisé en ce qu'**une plaque chauffante (11) est fabriquée en tôle, de préférence en tôle d'acier, avec une épaisseur entre 1,0 mm et 1,5 mm, de préférence entre 1,11 mm et 1,25 mm et un convecteur (12) est fabriqué en tôle, de préférence en un alliage contenant de l'aluminium, avec une épaisseur entre 0,1 mm et 0,4 mm, de préférence entre 0,12 mm et 0,2 mm et les parties précitées sont ensuite assemblées en utilisant un soudage par ultrasons torsionnel.

11. Procédé selon l'une quelconque des revendications 1 à 10, **caractérisé en ce que** la durée de soudage par soudure par points se situe entre 150 ms et 300 ms, de préférence entre 200 ms et 250 ms.

12. Procédé selon l'une quelconque des revendications 1 à 11, **caractérisé en ce que** la pression de soudage avec laquelle une surface de contact (3) d'une sonotrode (2) d'un dispositif de soudage est appuyée sur une surface supérieure d'une partie à joindre à une autre partie, se situe entre 20 N/mm² et 25 N/mm².

13. Procédé selon l'une quelconque des revendications 1 à 12, **caractérisé en ce que** la puissance avec laquelle une sonotrode (2) est sollicitée, se situe entre 1 000 W et 2 000 W.

14. Corps de chauffage avec au moins deux parties, qui sont assemblées au moyen d'un assemblage par soudage, **caractérisé en ce que** l'assemblage par soudage est réalisé en utilisant un soudage à ultrasons, de préférence en utilisant un soudage à ultrasons torsionnel ou transversal, pour lequel une épaisseur d'une des parties assemblées par soudage à ultrasons se situe entre 0,1 mm et 0,4 mm.

15. Corps de chauffage selon la revendication 14, **caractérisé en ce qu'**au moins une partie du corps de chauffage est en aluminium ou alliage d'aluminium, pour lequel on utilise de préférence des alliages d'aluminium de type AA3xxx, AA4xxx, AA5xxx, AA6xxx ou de type AA8xxx et cette partie est assemblée au moins à une autre partie du corps de chauffage par complémentarité de matière par soudage à ultrasons torsionnel ou transversal.

16. Corps de chauffage selon la revendication 15, **caractérisé en ce qu'**au moins le convecteur du corps de chauffage est en aluminium ou alliage d'aluminium.

17. Corps de chauffage selon les revendications 14 à 16, **caractérisé en ce qu'**une partie du corps de chauffage est une plaque chauffante (11) avec une pluralité de conduits de chauffage (18) passant parallèlement les uns par rapport aux autres ou un corps tubulaire d'un panneau chauffant, respectivement pour la traversée au moyen d'un milieu de chauffage liquide et une partie est un convecteur (12) avec une pluralité de conduits de convecteur (20) qui sont disposés entre une surface supérieure du convecteur (12) et une surface supérieure attribuée de la plaque chauffante (11) ou du corps tubulaire, une mesure de division de la plaque chauffante (11) correspondant en option à une mesure de division du convecteur (12).
